# EUROPÄISCHE PATENTSCHRIFT

(11) **EP 0 993 392 B1**
(45) Veröffentlichungstag und Bekanntmachung des Hinweises auf die Patenterteilung: **28.11.2001**
(21) Anmeldenummer: 98941318.2
(22) Anmeldetag: 10.07.1998
(51) Int. Cl.: B60N 2/00

(54) **VORRICHTUNG ZUR SCHNELLÖSBAREN, VERSCHIEBBAREN UND SCHNELL ARRETIERBAREN BEFESTIGUNG EINES FAHRZEUGSAUSRÜSTUNGSTEILES**
DEVICE FOR SECURING QUICK-RELEASE, DISPLACEABLE AND QUICK-LOCKING MOTOR VEHICLE EQUIPMENT
DISPOSITIF DE FIXATION PERMETTANT UNE LIBERATION RAPIDE, UN DEPLACEMENT ET UN BLOCAGE RAPIDE POUR PARTIE D'EQUIPEMENT DE VEHICULE

(30) Priorität: 10.07.1997 DE 29712180 U
(43) Veröffentlichungstag der Anmeldung: 19.04.2000
(73) Patentinhaber: Oettl, Heinrich, 81373 München (DE)
(72) Erfinder: Oettl, Heinrich, 81373 München (DE)
(74) Vertreter: Müller-Boré & Partner Patentanwälte
(86) Internationale Anmeldenummer: EP9804316
(87) Internationale Veröffentlichungsnummer: WO9902366

(56) Entgegenhaltungen:
- GB-A- 2 219 493
- US-A- 3 677 195

## Beschreibung

Die Erfindung betrifft eine Vorrichtung zur schnellösbaren, verschiebbaren und schnell arretierbaren Befestigung eines Fahrzeugausrüstungsteiles, wie z.B. eines Sitzes, einer Sitzbank, eines Tisches oder dergleichen in einem Fahrzeug, insbesondere einem Kraftfahrzeug. Insbesondere, jedoch nicht ausschließlich, befaßt sich die Erfindung mit einer Sitzschnellarretierungsschiene, welche vorgesehen ist, um zwischen dem Fahrzeugboden und dem Sitz angeordnet zu werden, welche ein einfaches und bequemes Verstellen wie auch Ausbauen des Sitzes ermöglicht.

Übliche Vorrichtungen zur Schnellverstellung von Sitzen, insbesondere von Sitzen mit integrierten Sicherheitsgurten in Fahrzeugen, bestehen üblicherweise aus zwei Schienen, zwischen welchen Kugeln zur Lagerung vorgesehen sind. Jeweils eine der Schienen wird mit dem Sitz bzw. der Karosserie fest verbunden. Diese bekannten Vorrichtungen stellen jedoch lediglich einen begrenzten Verstellbereich zur Verfügung und ermöglichen es auch nicht, den Sitz bei Bedarf schnell und einfach von der Karosserie zu lösen.

Aus der DE-A-195 20 959 ist ein Schnellwechselbeschlag, insbesondere für Lochschienen in Flugzeugen, bekannt. Der bekannte Beschlag umfaßt ein Gehäuse, in welchem pilzförmige Füße gelagert sind, welche über einen exzentrisch gelagerten Schwenkhebel betätigbar sind um den Beschlag mittels Klemmung festzusetzen bzw. zu lösen. Ferner ist an dem Gehäuse der bekannten Vorrichtung ein Zapfen vorgesehen, um zur Führung in den Schlitz der Lochschiene einzugreifen, wobei eine in dem Gehäuse gelagerte Exzenterwelle mit den daran befestigten Füßen im gelösten Zustand längsverschiebbar ist, so daß der zwischen den Füßen angeordnete Zapfen von den Füßen variabel beabstandet ist.

Dieser bekannte Schnellwechselbeschlag ist somit geeignet, um eine schnellösbare Befestigung von z.B. Sitzen in einem Flugzeug zu erreichen, jedoch besteht keine Verstell- oder Verschiebmöglichkeit, insbesondere keine arretierbare Verstellmöglichkeit. Des weiteren kann das Anordnen des Schnellwechselbeschlages, bedingt durch den variablen Abstand zwischen den Zapfen und den Füßen, unbequem und zeitaufwendig sein, wobei zusätzlich das Risiko besteht, daß der Beschlag nicht vollständig außerhalb der Löcher der Lochschiene angeordnet ist, so daß ein unbeabsichtigtes Ausrücken auftreten kann. Schließlich ist bei der bekannten Vorrichtung auch die Sicherheit nicht ausreichend, da die Befestigung ausschließlich über Reibschluß erfolgt.

Die GB-A-2, 219 493 offenbart eine Sitzverankerung entsprechend der Vorrichtung gemäß dem Oberbegriff des Anspruchs 1, wobei ein an einem Träger befestigter Sitz an einer Bodenschiene befestigt wird, wobei ein Glied mit Klemmelementen an dem Träger befestigt ist. Die Klemmelemente können in Ausnehmungen in der Bodenschiene zur Festlegung des Trägers eingreifen. Weiterhin ist eine an dem Träger befestige Klemmeinrichtung offenbart, welche über einen Hebel gedreht kann, um den Block nach oben und den Träger nach unten zu bewegen, wodurch die Klemmelemente an der Bodenschiene festgelegt werden. Die bekannte Verankerung hat jedoch den Nachteil, daß sie einen komplizierten Aufbau aufweist, so daß sie insbesondere einen hohen Stückpreis aufweist und keine schnell arretierbare Befestigung des Sitzes zuläßt.

Es ist daher Aufgabe der vorliegenden Erfindung, eine einfache und schnell arretierbare Befestigungsvorrichtung für ein Fahrzeugausrüstungsteil bereitzustellen.

Diese Aufgabe wird erfindungsgemäß durch eine Vorrichtung gemäß Anspruch 1 gelöst. Bevorzugte Ausführungsformen sind Gegenstand der Unteransprüche.

Dementsprechend wird vorteilhaft in schnellösbarer Weise die Befestigung eines beliebigen Fahrzeugausrüstungsteiles in einem Fahrzeug ermöglicht, die eine Verschiebung bzw. Verstellung und eine schnelle und bequeme Arretierung ermöglicht und die hohen Sicherheitsanforderungen genügt. Insbesondere soll die Vorrichtung zusätzlich zum einen sicherstellen, daß zu jedem Zeitpunkt, eine sichere Befestigung vorliegt und daß zum - anderen ein unbeabsichtigtes Lösen der Befestigung auch bei hoher Krafteinwirkung ausgeschlossen ist.

Insbesondere wird durch die Erfindung eine sehr sichere Vorrichtung bereitgestellt zum schnellösbaren, verschiebbaren und schnell arretierbaren Befestigen eines Fahrzeugausrüstungsteiles, wie z.B. eines Sitzes, insbesondere eines Sitzes mit Sicherheitsgurt in einem Fahrzeug, wie z.B. einem Kraftfahrzeug oder auch einem Flugzeug und dergleichen. Die erfindungsgemäße Vorrichtung umfaßt ein Gehäuse und von dem Gehäuse vorspringende Klemmelemente, bevorzugt zumindest drei Klemmelemente, welche jeweils zumindest eine Auskragung aufweisen, um einen Vorsprung des Fahrzeuges oder eines daran festgelegten Befestigungsteiles, insbesondere einer Lochschlitzschiene, zu hintergreifen. Die

Vorrichtung umfaßt zumindest ein verschiebbares erstes Spannelement, an welchem die Klemmelemente einzeln oder in Gruppen festlegbar sind, welches in einer Richtung verschiebbar ist, bei welcher die gewünschte Klemmwirkung erzielt wird. Insbesondere ist das erste Spannelement in vertikaler Richtung verschiebbar. Die Bewegung des ersten Spannelementes kann durch eine Führung der Klemmelemente oder durch eine separat vorzusehende Einrichtung, wie z.B. Gleitschienen oder eine spezielle Ausgestaltung des Gehäuses, geführt werden. Ferner ist zumindest ein zweites Spannelement vorgesehen, welches im wesentlichen senkrecht zum ersten Spannelement bewegbar ist und eine Verschiebung des ersten Spannelementes und somit ebenfalls der Klemmelemente veranlaßt. Insbesondere ist das zweite Spannelement in horizontaler Richtung verschiebbar. Durch das Verschieben des zweiten Spannelementes wird das erste Spannelement und somit auch die daran befestigten Klemmefemente verschoben und insbesondere angehoben um reibschlußmäßig eine Klemmwirkung erzielt, wobei insbesondere der oben erwähnte Vorsprung zwischen das Gehäuse und die Auskragungen geklemmt wird. Schließlich umfaßt die erfindungsgemäße Vorrichtung noch eine Positioniereinrichtung, die einen festen Abstand zu den Klemmelementen aufweist und vorgesehen ist, eine lösbare kraftschlüssige Verbindung mit dem Fahrzeug oder dem daran festgelegten Befestigungsteil zu bewirken.

Durch die Kombination von kraftschlüssigem Eingriff der Positioniereinrichtung und dem durch die Klemmelemente erzeugten Reibschluß kann eine insgesamt hochfeste Verbindung realisiert werden, die sich auch bei starken einwirkenden Kräften nicht löst. Durch den festgelegten Abstand zwischen der Positioniereinruchtung und den Klemmelementen wird ferner das Verrutschen der Klemmelemente und somit ein mögliches Außereingrifftreten verhindert. Nach dem Lösen der Positioniereinrichtung und der Klemmelemente kann eine Verschiebung stattfinden, welche mittels der Positionierreinrichtung schnell arretierbar ist, wonach es ausreichend ist, erneut die Klemmelemente durch eine Relativbewegung der Spannelemente in Eingriff zu bringen. Hierbei ist es insbesondere vorteilhaft, wenn die Klemmelemente mit der Positioniereinrichtung mechanisch gekoppelt sind. Somit ergibt sich zum einen die Möglichkeit, daß durch lediglich eine einfache Betätigung die Vorrichtung verriegelt oder gelöst werden kann. Zum anderen wird somit die Moglichkeit bereitgestellt, das Lösen der Klemmeiemente erst zu erlauben, nachdem die Positioniereinrichtung gelöst wurde, oder umgekehrt.

Die Spannelemente weisen erfindungsgemäß einander gegenüberliegende komplementäre Flächen auf, welche als Schräg- oder Keilflächen ausgebildet sind. Somit läßt sich in besonders einfacher Weise eine lineare Übersetzung von einer vertikalen Bewegung des zweiten Spannelementes in eine horizontale Verschiebebewegung des ersten Spannelementes erreichen. Durch das Bereitstellen von Keilflächen kann bei entsprechender Ausrichtung zusätzlich die Sicherheit der Vorrichtung erhöht werden. Wenn die Vorrichtung nämlich in einem Kraftfahrzeug montiert ist, können die Keilflächen so ausgerichtet werden, daß z.B. bei einer Bremseinwirkung die Klemmwirkung der Klemmefemente erhöht wird, indem durch die auftretenden Trägheitskräfte mittels der Umsetzung über die Schrägflächen die Kiemmwirkung erhöht wird. Bei einer insbesondere einfachen Ausgestaltung könnte beispielhaft jeweils ein erstes Spannelement für jedes Kiemmelement vorgesehen sein, wobei in diesem Fall auch jeweils für dessen Betätigung eine Schrägfläche vorzusehen ist. Wenn mehrere Klemmelemente gruppenartig an einem der ersten Spannelemente befestigt sind, ist es ausreichend, lediglich eine Keil- bzw. Schrägfläche vorzusehen, jedoch ist es für eine symmetrische Kraftübertragung vorteilhaft, zumindest zwei Schräg- oder Keilfiächen vorzusehen. Wenn die einander gegenüberliegenden komplementären Flächen gewölbt sind oder einem Nockenabschnitt ähnlich sind, kann des weiteren ein nicht-linearer Beaufschlagungsverlauf der Klemmelemente erreicht werden. Somit kann am Anfang der Bewegung des zweiten Spannelementes z.B. eine starke Verschiebung des ersten Spannelementes auftreten, während zum Ende dieser Bewegung die Verschiebung relativ gering ist, wobei jedoch die Krafteinbringung entsprechend vergrößert wird.

Bevorzugt wird die Vorrichtung verwendet in Kombination mit einer Lochschlitzschiene oder einem lochschienenförmigen Schlitz mit rasterförmiger Aufteilung, die bzw. der an dem Fahrzeug vorgesehen ist. Die Lochschlitzschiene bzw. der Schlitz umfaßt bevorzugt einen länglichen Durchbruch mit überlagerten kreisförmigen Löchern oder Aussparungen, wobei die Löcher insbesondere bevorzugt um einen bestimmten oder normierten Rasterabstand voneinander beabstandet sind. Insbesondere wenn Autos, Flugzeuge, Busse oder dergleichen mit solchen Lochschlitzen versehen sind, besteht eine hohe Vielseitigkeit bezüglich der festzulegenden Positionen. Bei dieser bevorzugten Ausführungsform wird die jeweilige Relativposition der Vorrichtung bezüglich des Lochschlitzes durch die Positioniereinrichtung bestimmt.

Bevorzugt ist der feste Abstand zwischen der Positioniereinrichtung und den jeweiligen Klemmelementen ein ganzzahliges Vielfaches des Rasterabstandes des Lochschlitzes zuzüglich einer bestimmten Länge, insbesondere bevorzugt zuzüglich einer halben Rasterlänge. Somit wird gewährleistet, daß nach dem Einrücken der Positioniereinrichtung keines der Klemmelemente auf der Höhe eines Loches vorliegt, so daß ein unbeabsichtigtes Außereingrifftreten verhindert ist. In diesem Zusammenhang sollte noch erwähnt werden, daß die einzelnen Klemmelemente relativ zueinander, bevorzugt im wesentlichen um den Rasterabstand, beabstandet sind, so daß sie insgesamt entweder an Positionen entsprechend den Löchern vorliegen oder nicht, wie es insbesondere zum Festklemmen erforderlich ist und durch die Positioniereinrichtung bestimmt wird.

Bevorzugt entsprechen die Vorkragungen der Klemmelemente form- und größenmäßig im wesentlichen den Löchern des Lochschlitzes, so daß sie einfach, bevorzugt unter leichtem oder keinem Spiel, bei entsprechender Anordnung in die Löcher eingeführt und herausgenommen werden können. Ferner ist es bevorzugt, daß die Klemmelemente, oberhalb der Vorkragungen größenmäßig praktisch den Abschnitten des Lochschlitzes entsprechen, an denen kein Loch vorliegt. Somit wird zum einen eine ausreichende Stabilität der Klemmelemente gewährleistet und zum anderen können somit die Klemmelemente bei einer Relativverschiebung der Vorrichtung bezüglich des Lochschlitzes als Führungselemente dienen.

Gemäß einer bevorzugten Ausführungsform ist die Positioniereinrichtung als ein Rastbolzen vorgesehen, welcher im wesentlichen im Querschnitt der Form und der Größe eines Loches des Lochschlitzes entspricht. Durch eine solche Ausgestaltung der Positioniereinrichtung wird ein größtmöglicher Kraftschluß erzielt. Bevorzugt wird der Rastbolzen mittels einer Auf- und Abwärtsbewegung in und außer Eingriff gebracht. Wie bereits vorangehend erwähnt, ist es möglich, die Bewegung der Positioniereinrichtung mit der Bewegung der Klemmelemente zu koppeln.

Gemäß einer alternativen Ausführungsform wird die Positioniereinrichtung mittels Verdrehung in und außer Eingriff bezüglich des Lochschlitzes gebracht. Zu diesem Zweck ist die Positioniereinrichtung bevorzugt als ein Drehbolzen vorgesehen, der in einer Querschnittsansicht im wesentlichen die Form einer Ellipse oder eines Kreises mit zwei abgeflachten Seiten oder abzüglich zweier Kreisabschnitte aufweist. In dieser Querschnittsansicht entspricht bevorzugt die größte Abmessung dem Lochdurchmesser und die kleinste Abmessung praktisch der Schlitzbreite. Insbesondere bevorzugt ist die Positioniereinrichtung dergestalt, daß in einer ersten winkelmäßigen Position ein Kraftschluß bezüglich des Lochschlitzes besteht, und zwar insbesondere über einen möglichst großen Teil, während in einer um 90° verdrehten Ausrichtung die Positioniereinrichtung bezüglich des Loches außer Eingriff steht und durch den Schlitzabschnitt des Lochschlitzes gleiten kann.

Bevorzugt weist die Vorrichtung im wesentlichen fluchtend zu den Klemmelementen zumindest ein Gleitelement auf, welches beim Verschieben zum einen die Gleitreibung reduziert und zum anderen in dem Schlitzabschnitt des Lochschlitzes angeordnet ist und somit die Verschiebebewegung führt. Um eine erhöhte Führung bereitzustellen, sollte das Gleitelement bevorzugt länger sein als der Durchmesser der Löcher, so daß in jedem Fall eine Anlage mit einem Schlitzabschnitt gewährleistet ist.

Die Spannelemente C und D sind bevorzugt derart in dem Gehäuse angeordnet, daß bei zumindest einer vorbestimmten Position eine Selbsthemmung auftritt. Dies kann z.B. durch teilweise aufgerauhte oder gewellte komplementäre Flächen der Spannelemente erreicht werden; Insbesondere ist es wünschenswert, daß die oben erwähnte Selbsthemmung in der verschlossenen oder verriegelten Position stattfindet, so daß zum Lösen der Klemmwirkung zuerst der Widerstand der Selbsthemmung überwunden werden muß.

Vorteilhafterweise umfaßt die Vorrichtung ein Betätigungselement, welches z.B. in der Form eines Kniehebels an dem Gehäuse angelenkt sein kann. Der Kniehebel ist des weiteren an dem zweiten Spannelement angelenkt, um eine Relativbewegung zu bewirken. Durch die selbsthemmende Wirkung eines Kniehebels kann in einer vorbestimmten Position auch die Bewegung gehemmt werden, wodurch ein unbeabsichtigtes Ausrücken verhindert wird. Bei einem Fahrzeugsitz befindet sich das Betätigungselement bevorzugt front- oder stirnseitig, d.h. in der Regel im Fußraum des Sitzes, so daß eine leichte Zugänglichkeit erreicht wird, die ein schnelles und einfaches Lösen, Verschieben und Arretieren des Sitzes ermöglicht. In der eingerückten bzw. verriegelten bzw. arretierten Position der Vorrichtung erstreckt sich der Bedienhebel bevorzugt in senkrechter Richtung, so daß lediglich ein geringer Bauraum erforderlich ist. In dieser Position wird ebenfalls durch die selbsthemmende Wirkung des Kniehebels ein Ausrücken, bedingt durch äußerlich einwirkende Kräfte, verhindert.

Schließlich ist es bevorzugt, daß zumindest eine Federeinrichtung vorgesehen ist. Die Federeinrichtung kann vorgesehen sein, um die Positioniereinrichtung, die Klemmeinrichtung, das erste Spannelement, das zweite Spannelement, das Betätigungselement und/oder das Gleitelement in eine der jeweiligen Positionen vorzuspannen. Selbstverständlich ist auch eine beliebige Anzahl an Kombinationen möglich. Durch das Bereitstellen von einer Federeinrichtung kann bezüglich des jeweiligen Elementes eine spiel- oder klapperfreie Anordnung bereitgestellt werden. Ferner kann durch die jeweiligen Federeinrichtungen eine selbsttätige Wirkung erreicht werden, alternativ kann die Federeinrichtung auch vorgesehen sein, um ein aktives Betätigen des jeweiligen Elementes zu verlangen. Als Beispiel sei hier eine Federbeaufschlagung der Positioniereinrichtung angegeben, welche in der Eingriffsposition mittels einer Feder vorgespannt ist. Somit muß zum Lösen und/oder Verschieben des Sitzes die Positioniereinrichtung aktiv außer Eingriff gebracht werden, d.h. z.B. herausgezogen oder verdreht, und zwar entgegen der Wirkung der Feder. Durch die bloße aktive Betätigung kann praktisch ein unbeabsichtigtes Betätigen oder Lösen ausgeschlossen werden. Des weiteren führt diese Vorspannung dazu, daß wenn eine Rasterposition nicht ordnungsgemäß eingenommen ist, ein einfaches Verschieben des Sitzes ausreicht, um den Eingriff der Positioniereinrichtung zu bewirken. Somit kann ein Benutzer beispielhaft den Sitz zwischen jeweiligen Rasterpositionen einfach verschieben, ohne daß er hierfür die Vorrichtung beobachten müßte, wie es z.B. der Fall ist bei der bekannten Vorrichtung, wie offenbart in der DE-A-195 20 959.

Weitere Merkmale, Vorteile und Anwendungsmöglichkeiten der Erfindung ergeben sich aus der folgenden Beschreibung einer derzeit bevorzugten Ausführungsform der Erfindung, welche rein beispielhaft illustrativ und unter Bezugnahme auf die beigefügten Zeichnungen erfolgt.
- Figur 1: zeigt eine Schnittansicht der bevorzugten Ausführungsform der erfindungsgemäßen Vorrichtung in einer entriegelten Stellung.
- Figur 2: zeigt die in Figur 1 gezeigte Ausführungsform in einer analogen Ansicht, jedoch in der verriegelten oder auch Klemmwirkung erzeugenden und arretierten Position.

Bei der dargestellten Ausführungsform ist die Vorrichtung ausgebildet als eine Sitzschnellarretierungsschiene, die ein Gehäuse F umfaßt. In der dargestellten Ausführungsform ist das Gehäuse aus einem Metallhohlprofil mit im wesentlichen rechteckigem Querschnitt gebildet. Das Gehäuse F ist vorgesehen, um mit der Oberfläche an der Unterseite eines Sitzes montiert zu werden.

Die gezeigte Ausführungsform ist insbesondere vorgesehen, in eine Lochschlitzschiene einzugreifen, welche zu diesem Zweck am Fahrzeugboden montiert ist. Eine Lochschlitzschiene ist dem Fachmann bekannt und kann z.B. aus einem weiteren Metallhohlprofil mit reckteckigem Querschnitt gebildet sein. An der Oberfläche dieses Profiles ist in Längsrichtung ein durchgängiger Schlitz bereitgestellt. Des weiteren sind dem Schlitz bei einem vorbestimmten Raster kreisförmige Öffnungen überlagert. Zur relativen Anordnung der bevorzugten und dargestellten Ausführungsform sind an der Unterseite des Gehäuses F Bohrungen vorgesehen, durch welche Klemmelemente B geführt sind.

Die Klemmelemente B sind in der gezeigten Ausführungsform jeweils gebildet aus einem Schaft mit einer Auskragung am unteren Endabschnitt. Der Schaftdurchmesser der Klemmelemente entspricht im wesentlichen den Bohrungen an der Unterseite des Gehäuses F, sowie praktisch der Spaltbreite der nicht dargestellten Lochschiene. Die Klemmelemente B sind relativ zueinander um den Rasterabstand der Lochschiene beabstandet, so daß entweder sämtliche Klemmelemente fluchtend zu Löchern angeordnet sind, um die Vorrichtung in der Lochschiene anzuordnen, oder nicht, um die Vorrichtung bezüglich der Lochschiene festzuklemmen. In der gezeigten Ausführungsform sind sechs Klemmelemente B vorgesehen, aufgeteilt in zwei Gruppen. Die Klemmelemente von jeder Gruppe sind an ihren oberen Enden mit zwei ersten Spannelementen D verbunden, z.B. verschraubt, verschweißt oder ähnliches.

Das erste Spannelement D weist eine plane Oberfläche sowie vier diesbezüglich senkrecht verlaufende Seitenflächen auf. An der Unterfläche des ersten Spannelementes D sind keilförmige Vorsprünge ausgebildet. In der gezeigten Ausführungsform sind zwei erste Spannelemente D gezeigt, welche zwischen sich einen leichten Abstand definieren, welcher z.B. zur Verschraubung mit dem darüber anzuordnenden Sitz vorgesehen sein kann.

In der dargestellten Ausführungsform erstreckt sich ferner in dem Gehäuse ein zweites Spannelement C, welches in der gezeigten Ausführungsform sich beidseitig der Klemmelemente B erstreckt, ohne mit diesen in unmittelbarem Eingriff zu stehen. Das zweite Spannelement C ist unterhalb der ersten Spannelemente D angeordnet, wobei die ersten Spannelemente D auf der Oberfläche des zweiten Spannelementes C anliegen und ruhen. Zu diesem Zweck ist die Oberseite des zweiten Spannelementes C mit entsprechenden keilförmigen Aussparungen bereitgestellt, welche praktisch fluchtend die keilförmigen Vorsprünge der ersten Spannelemente D aufnehmen.

Die Führungsfunktion, bereitgestellt durch den jeweiligen Schaft der Klemmelemente B, wird in der Ausführungsform durch zwei Gleitelemente G unterstützt. Die Gleitelemente G sind an der Unterseite des Gehäuses F montiert, und erstrecken sich praktisch fluchtend zu den Klemmelementen B. Obwohl aus den Zeichnungen nicht zu entnehmen, sei angemerkt, daß die Breite der Gleitelemente G praktisch der Breite des Schlitzes der Lochschlitzschiene entsprechen sollte, so daß eine entsprechende Mittelführung zusätzlich und/oder unabhängig von den Klemmelementen B bereitgestellt ist. Wie sich aus der gezeigten Ausführungsform deutlich ergibt, weist zumindest das an der rechten Seite angeordnete Gleitelement G eine Länge auf, die größer ist als der Durchmesser des Loches bzw. der Bohrung in der Lochschiene. Somit wird die Gleitmittelführung unabhängig von der Position in der Lochschiene ständig aufrechterhalten.

Am linken Ende des Gehäuses F ist in der gezeigten Ausführungsform die Positioniereinrichtung als ein Rastbolzen gezeigt. In der gezeigten Ausführungsform wird der Rastbolzen A durch zwei in dem Gehäuse F vorgesehenen Bohrungen geführt. In der gezeigten Ausführungsform ist der Rastbolzen A nach oben gezogen, entgegen der Wirkung der dargestellten Feder, so daß seine Unterseite praktisch mit dem Gehäuse F fluchtend. Somit steht der Rastbolzen A bezüglich der darunter angeordneten Lochschiene vollständig außer Eingriff. Zur Betätigung des Rastbolzens können beliebige bekannte Vorkehrungen getroffen sein, wobei auch insbesondere eine unmittelbare Wechselwirkung bezüglich der Spannelemente D denkbar ist, obwohl nicht dargestellt.

An dem dem Rastbolzen A gegenüberliegenden Ende des Gehäuses F ist eine Betätigungseinrichtung E vorgesehen. In der gezeigten Ausführungsform ist die Betätigungseinrichtung in der Form eines Kniehebels vorgesehen, welche einerseits an dem Gehäuse F angelenkt und andererseits mit dem zweiten Spannelement C in Verbindung steht. In der gezeigten Ausführungsform befindet sich der Kniehebel E in der gelösten Position. Ein weiteres Einknikken des Kniehebels wird hier durch einen wechselseitigen Eingriff der Spannelemente C und D verhindert.

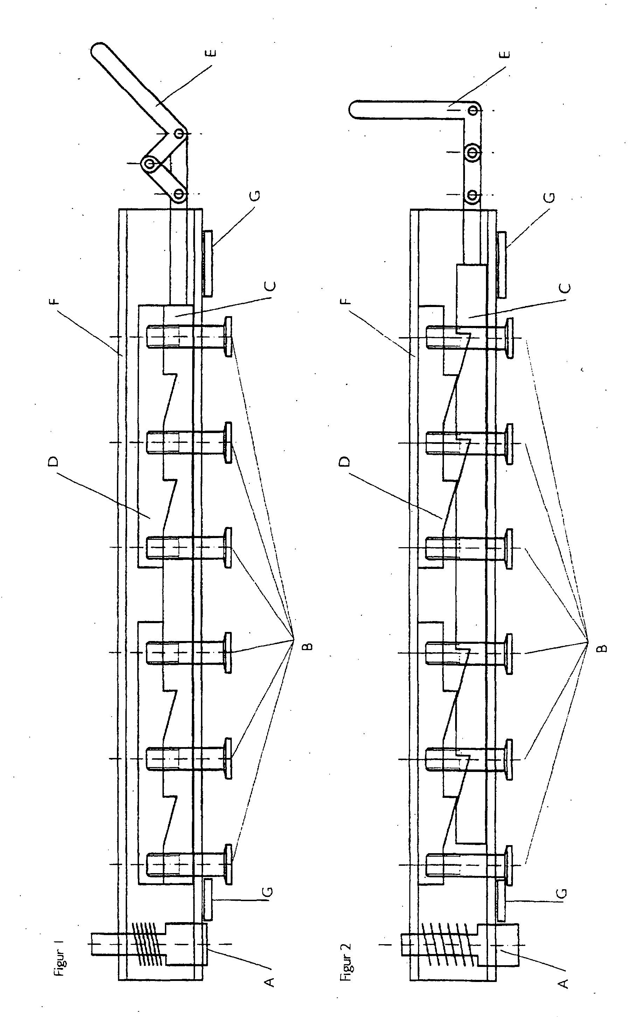

In der in Figur 1 gezeigten Position kann somit zum Montieren des Sitzes die Vorrichtung in einfacher Weise oberhalb der Lochschiene angeordnet werden. Zum Einbau des Sitzes ist darauf zu achten, daß die Klemmelemente D mit den Auskragungen, die in Form und Größe den Löchern der Lochschiene entsprechen, in Register angeordnet werden, oberhalb der jeweiligen Löcher. Somit können die Klemmelemente B durch die Löcher der Lochschiene eingeführt werden. Nach dem Einführen der Klemmelemente befinden sich die Gleitelemente G in den Schlitzen, so daß die Vorrichtung in Längsrichtung verschiebbar ist. Da der Schaft von jedem der Klemmelemente B im Durchmesser praktisch der Schlitzbreite der Lochschiene entspricht, kann die gesamte Vorrichtung einfach und beliebig entlang der Lochschiene verschoben werden. Da sich auch der Rastbolzen A in der hochgezogenen Position befindet, tritt diesbezüglich keine Wechselwirkung auf. Wenn der Benutzer nun in etwa die gewünschte Position des Sitzes erreicht hat, läßt er einfach den Rastbolzen A los, so daß dieser mit der Lochschiene in Eingriff tritt. Sollte der Rastbolzen A nicht fluchtend oberhalb eines Loches vorliegen, so kann der Benutzer durch leichtes Verschieben des Sitzes ein Einrasten des Rastbolzens veranlassen. Da der Rastbolzen in der gezeigten Ausführungsform von dem nächsten Klemmelement B praktisch um eine halbe Rasterlänge beabstandet ist, ist es somit gewährleistet, daß zumindest das dem Rastbolzen A benachbarte Klemmelement B auf halbem Weg zwischen zwei Löchern der Lochschiene angeordnet ist. Da ferner in der gezeigten Ausführungsform der Abstand der jeweiligen Klemmelemente B zueinander praktisch dem Rasterabstand der Lochschiene entspricht, liegen somit sämtliche Vorkragungen der Klemmelemente B an Abschnitten der Lochschiene vor, an denen keine Löcher vorgesehen sind. Somit wird durch einfaches Ineingriffbringen der Positioniereinrichtung A eine Positionierung der Gesamtvorrichtung erreicht, bei welcher eine optimale Klemmwirkung erreicht werden kann.

Wie es in Figur 2 gezeigt ist, stent der Rastbolzen A nun an der Unterseite des Gehäuses F vor, so daß er mit der darunter angeordneten, nicht gezeigten Lochschiene in Eingriff steht, nämlich mit einem Loch davon. Nachfolgend oder gleichzeitig zu dem Eingreifen des Rastbolzens A wird der Kniehebel E derart verschwenkt, daß dessen Kniebereich gestreckt wird, so daß ein nachfolgendes Lösen lediglich durch Betätigen des äußeren Abschnittes des Hebels möglich ist. Durch das Ausstrecken des Kniebereiches des Kniehebels E wird in der gezeigten Ausführungsform das zweite Spannelement C nach rechts verschoben. Wie sich deutlich aus den Figuren ergibt, werden durch das Verschieben des zweiten Spanrielementes C die darauf ruhenden ersten Spannelemente D mittels der entsprechenden Keilflächen veranlaßt, sich nach oben zu verschieben, wobei sie die Klemmelemente B mitnehmen. In der in Figur 2 gezeigten Position entspricht nun der Abstand zwischen den Vorkragungen der Klemmelemente B und der Unterseite des Gehäuses F praktisch der Profilstärke der Lochschiene, so daß ein Reibschluß durch die Klemmwirkung erzielt ist. Dieser Reibschluß wird durch den Kraftschluß des Rastbolzens A ergänzt, so daß eine vollständig sichere Arretierung und Befestigung des Sitzes erzielt ist.

Ausgehend von der in Figur 2 gezeigten Position ist es für den Benutzer ausreichend, den Kniehebel E zu betätigen, um den Reibschluß aufzuheben. Bei gleichzeitigem oder nachfolgendem Ausrücken des Rastbolzens A läßt sich nun die Vorrichtung und somit der Sitz in einfacher Weise in Längsrichtung verschieben. Durch das Bereitstellen einer Lochschlitzschiene besteht somit virtuell eine uneingeschränkte Verstellmöglichkeit. Wenn der Benutzer die gewünschte Position erreicht hat, werden die oben beschriebenen Schritte gleichzeitig oder in Folge wiederholt. Wenn jedoch der Sitz aus dem Fahrzeug zu entfernen ist, werden die Vorkragungen der Klemmelemente B fluchtend zu den Löchern ausgerichtet, so daß durch einfaches Nachobenherausheben ein vollständiges Entfernen des Sitzes möglich ist.

Obwohl die Erfindung im vorangegangenen vollständig unter Bezugnahme auf eine spezifische Ausführungsform beschrieben wurde, sollte erkannt werden, daß verschiedene Veränderungen und Modifikationen innerhalb des Umfanges der Erfindung durchgeführt werden können. So könnte z.B., obwohl in den Zeichnungen nicht dargestellt, die Positioniereinrichtung A ein Drehbolzen sein, welcher zwischen zwei um 90° verstellte Positionen verdreht werden kann, um jeweils mit einem Loch der Lochschiene in und außer Eingriff gebraucht zu werden. In diesem Fall sollte der Drehbolzen A praktisch die Form einer Ellipse oder bevorzugter die Form eines Kreises abzüglich zweier Kreisabschnitte aufweisen, so daß er in der einen Position bezüglich des Loches einen Kraftschluß erzeugen kann, während er in der anderen Winkelposition gleitfähig durch den Lochschlitz bewegt werden kann. Ferner ist es auch denkbar, die Spannelemente C und D mit nicht-linearen Keilflächen bereitzustellen. Auch die Auskragungen der Klemmelemente B könnten in der zuvor erwähnten ellipsen artigen Form der Positioniereinrichtung ausgebildet sein, wodurch bei drehbar gelagerten Klemmelementen somit auch ein einfacher Schlitz ohne zusätzliche Löcher verwendet werden kann.

## Patentansprüche

1. Vorrichtung zur schnellösbaren, verschiebbaren und schnell arretierbaren Befestigung eines Fahrzeugausrüstungsteiles in einem Fahrzeug, umfassend ein Gehäuse (F), von dem Gehäuse (F) vorspringende Klemmelemente (B), die zumindest eine Auskragung aufweisen, um einen Vorsprung des Fahrzeuges oder eines daran festgelegten Befestigungsteiles zu hintergreifen, zumindest ein im wesentlichen in der Klemmwirkung erzeugenden Richtung verschiebbares erstes Spannelement (D), an welchem die Klemmelemente (B) festlegbar sind, und zumindest ein zweites Spannelement (C), welches senkrecht zum ersten Spannelement bewegbar ist und eine Verschiebung des ersten Spannelementes (D) und somit der Klemmelemente (B) veranlaßt, um reibschlußmäßig eine Klemmwirkung zu erzielen, sowie eine unter festem Abstand zu den Klemmelementen (B) vorgesehene Positioniereinrichtung (A), die mit dem Fahrzeug und/oder dem daran festgelegten Befestigungsteil kraftschlüssig in und außer Eingriff bringbar ist,
**dadurch gekennzeichnet, daß**
die zwei Spannelemente (C, D) einander gegenüberliegende komplementäre Flächen, welche als Schräg- oder Keilflächen **ausgebildet sind,** aufweisen,
wobei das zweite Spannelement (D) bezüglich des ersten Spannelements (C) linear verschiebbar ist, und die Bewegung des zweiten Spannelements (D) durch die Schräg- oder Keilflächen in eine Bewegung des ersten Spannelements (C) umgesetzt wird, die eine Klemmwirkung verursacht.

2. Vorrichtung nach Anspruch 1, welche vorgesehen ist mit einer an dem Fahrzeug festlegbaren Lochschlitzschiene oder einem lochschienenförmigen Schlitz mit rasterartiger Aufteilung wechselzuwirken, wobei die Klemmelemente (B) um den Rasterabstand voneinander beabstandet sind.

3. Vorrichtung nach Anspruch 2, bei welcher der feste Abstand zwischen der Positioniereinrichtung (A) und den jeweiligen Klemmelementen (B) ein ganzzahliges Vielfaches des Rasterabstandes zuzüglich einer bestimmten Länge, insbesondere zuzüglich einer halben Rasterlänge beträgt.

4. Vorrichtung nach Anspruch 2 oder 3, bei welcher die Vorkragungen der Klemmelemente (B) in Form und/oder Größe im wesentlichen den Löchern der Lochschiene oder des lochschienenförmigen Schlitzes entsprechen, wobei die verbleibenden Abschnitte der Klemmelemente (B) insbesondere größenmäßig den Abschnitten der Lochschiene oder des lochschienenförmigen Schlitzes entsprechen, an denen kein Loch vorliegt.

5. Vorrichtung nach einem der Ansprüche 2 - 4, bei welcher die Positioniereinrichtung (A) ein Rastbolzen (A) ist, welcher im wesentlichen im Querschnitt der Form und Größe eines Lochs der Lochschiene oder des lochschienenförmigen Schlitzes entspricht und mittels Auf- und Abwärtsbewegung in und außer Eingriff bringbar ist, so daß eine kraftschlüssige Arretierung bereitgestellt ist.

6. Vorrichtung nach einem der Ansprüche 2 - 4, bei welcher die Positioniereinrichtung (A) mittels Verdrehen in und außer Eingriff bringbar ist, wobei die Positioniereinrichtung (A) in einer Schnittansicht insbesondere im wesentlichen die Form einer Ellipse oder eines Kreises mit zwei abgeflachten oder geraden Seiten aufweist, wobei die größte Abmessung praktisch dem Lochdurchmesser und die kleinste Abmessung praktisch der Schlitzbreite entspricht.

7. Vorrichtung nach einem der vorangegangenen Ansprüche, bei welcher zumindest ein Gleitelement (G) vorgesehen ist, um das Verschieben der Vorrichtung zu vereinfachen und/oder zu führen.

8. Vorrichtung nach einem der vorangehenden Ansprüche, bei welcher die zwei Spannelemente (C, D) derart in dem Gehäuse angeordnet sind, daß bei zumindest einer vorbestimmten Position des zweiten Spannelementes (C) mit Bezug auf das erste Spannelement (D) eine Selbsthemmung auftritt.

9. Vorrichtung nach einem der vorangegangenen Ansprüche, bei welcher ein. Betätigungselement (E), insbesondere ein Kniehebel an dem Gehäuse (F) sowie dem Spannelement (C) angelenkt ist, um die Relativbewegung des zweiten Spannelementes (C) zu bewirken und/oder zu hemmen.

10. Vorrichtung nach einem der vorangegangenen Ansprüche, bei welcher zumindest eine Federeinrichtung vorgesehen ist, um die Positioniereinrichtung, die Klemmelemente (B), das zweite Spannelement (C), das erste Spannelement (D), das Betätigungselement (E) und/oder das Gleitelement (G) in eine der jeweiligen Positionen vorzuspannen.

## Claims

1. Appliance for the rapidly releasable, displaceable and rapid-retention fixing of a piece of vehicle equipment in a vehicle, comprising a housing (F), clamping elements (B) which protrude from the housing (F) and have at least one projection in order to engage behind a protrusion on the vehicle or a fixing part fixed on the latter, at least one first tightening element (D), which can be displaced essentially in the direction in which a clamping effect is produced and on which the clamping elements (B) can be fixed, and at least one second tightening element (C) which can be moved perpendicularly to the first tightening element and brings about a displacement of the first tightening element (D) and thus of the clamping elements (B) so as to achieve a clamping effect by frictional engagement, and a positioning device (A) which is provided at a fixed spacing from the clamping elements (B) and can be moved into and out of force-maintained engagement with the vehicle and/or the fixing part fixed to the latter, **characterized in that** the two tightening elements (C, D) have mutually opposite complementary surfaces, which are designed as oblique or wedge faces, the second tightening element (D) being displaceable in a linear manner in relation to the first tightening element (C), and the movement of the second tightening element (D) being converted by the oblique or wedge faces into a movement of the first tightening element (C) which brings about a clamping effect.

2. Appliance according to Claim 1, which is provided to interact with a multi-hole slotted rail which can be fixed on the vehicle or with a slot in the form of a multi-hole rail and divided up in a grid-like pattern, the clamping elements (B) being spaced apart by the grid spacing.

3. Appliance according to Claim 2, in which the fixed spacing between the positioning device (A) and the respective clamping elements (B) is an integral multiple of the grid spacing plus a certain length, in particular plus half a grid length.

4. Appliance according to Claim 2 or 3, in which the projections of the clamping elements (B) essentially correspond in shape and/or size to the holes in the multi-hole rail or the slot in the form of a multi-hole rail, the remaining portions of the clamping elements (B) corresponding, especially in terms of size, to those portions of the multi-hole rail or slot in the form of a multi-hole rail in which there is no hole.

5. Appliance according to one of Claims 2-4, in which the positioning device (A) is a latching pin (A) which essentially corresponds in cross section to the shape and size of a hole in the multi-hole rail or the slot in the form of a multi-hole rail and can be moved into and out of engagement by means of upward and downward movement, thus providing force-maintained retention.

6. Appliance according to one of Claims 2-4, in which the positioning device (A) can be moved into and out of engagement by means of twisting, the positioning device (A) essentially having, in particular, the shape of an ellipse or a circle with two flattened or straight sides in a sectional view, the largest dimension practically corresponding to the hole diameter and the smallest dimension practically corresponding to the slot width.

7. Appliance according to one of the preceding claims, in which at least one sliding element (G) is provided to simplify and/or guide the displacement of the appliance.

8. Appliance according to one of the preceding claims, in which the two tightening elements (C,D) are arranged in such a way in the housing that self-locking occurs in at least one predetermined position of the second tightening element (C) with respect to the first tightening element (D).

9. Appliance according to one of the preceding claims, in which an actuating element (E), in particular a toggle lever, is connected pivotally to the housing (F) and to the tightening element (C) in order to effect and/or inhibit the relative motion of the second tightening element (C).

10. Appliance according to one of the preceding claims, in which at least one spring device is provided in order to preload the positioning device, the clamping elements (B), the second tightening element (C), the first tightening element (D), the actuating element (E) and/or the sliding element (G) into one of the respective positions.

## Revendications

1. Dispositif pour la fixation, permettant une libération rapide, un déplacement et un blocage rapide, d'une partie d'équipement de véhicule dans un véhicule, comprenant un boîtier (F), des éléments de serrage (B) dépassant du boîtier (F) et ayant au moins une saillie pour passer derrière une partie en saillie du véhicule ou d'une pièce de fixation fixée à celui-ci, au moins un premier élément de tension (D) qui peut être déplacé globalement dans la direction produisant l'action de serrage et auquel les éléments de serrage (B) peuvent être fixés, et au moins un deuxième élément de tension (C) qui est mobile perpendiculairement au premier élément de tension et qui provoque un déplacement du premier élément de tension (D) et donc des éléments de serrage (B) pour obtenir par frottement une action de serrage, ainsi qu'un dispositif de positionnement (A) qui est prévu à une distance fixe des éléments de serrage (B) et qui peut être mis en prise par force ou hors de prise avec le véhicule et/ou avec la pièce de fixation fixée à celui-ci,
**caractérisé en ce que**
les deux éléments de tension (C, D) comportent des surfaces complémentaires en face l'une de l'autre qui sont conçues comme des surfaces inclinées ou en coin,
le deuxième élément de tension (D) pouvant être déplacé de façon linéaire par rapport au premier élément de tension (C) et le mouvement du deuxième élément de tension (D) étant transformé par les surfaces inclinées ou en coin en un mouvement du premier élément de tension (C) qui provoque une action de serrage.

2. Dispositif selon la revendication 1, qui est prévu pour interagir avec une barre fendue perforée pouvant être fixée au véhicule ou avec une fente en forme de barre perforée avec division du type quadrillage, les éléments de serrage (B) étant distants les uns des autres de la distance de quadrillage.

3. Dispositif selon la revendication 2, dans lequel la distance fixe entre le dispositif de positionnement (A) et les éléments de serrage (B) respectifs vaut un multiple entier de la distance de quadrillage plus une certaine longueur, notamment plus une demi-longueur de quadrillage.

4. Dispositif selon la revendication 2 ou 3, dans lequel les parties en saillie des éléments de serrage (B) correspondent globalement en forme et/ou en dimension aux trous de la barre perforée ou de la fente en forme de barre perforée, les tronçons restants des éléments de serrage (B) correspondant notamment en dimension aux tronçons de la barre perforée ou de la fente en forme de barre perforée sur lesquels il n'y a pas de trou.

5. Dispositif selon l'une quelconque des revendications 2 à 4, dans lequel le dispositif de positionnement (A) est un boulon d'arrêt (A) qui correspond globalement en section transversale à la forme et à la dimension d'un trou de la barre perforée ou de la fente en forme de barre perforée et qui peut être mis en prise ou hors de prise au moyen de mouvements vers le haut et vers le bas, de telle sorte qu'un blocage par force est possible.

6. Dispositif selon l'une quelconque des revendications 2 à 4, dans lequel le dispositif de positionnement (A) peut être mis en prise ou hors de prise au moyen d'une torsion, le dispositif de positionnement (A) vu en coupe ayant notamment globalement la forme d'une ellipse ou d'un cercle avec deux côtés aplatis ou droits, la plus grande dimension correspondant pratiquement au diamètre de trou et la plus petite dimension correspondant pratiquement à la largeur de fente.

7. Dispositif selon l'une quelconque des revendications précédentes, dans lequel au moins un élément de glissement (G) est prévu pour simplifier et/ou guider le déplacement du dispositif.

8. Dispositif selon l'une quelconque des revendications précédentes, dans lequel les deux éléments de tension (C, D) sont disposés de telle sorte dans le boîtier que, pour au moins une position prédéterminée du deuxième élément de tension (C) par rapport au premier élément de tension (D), il se produit un blocage automatique.

9. Dispositif selon l'une quelconque des revendications précédentes, dans lequel un élément d'actionnement (E), notamment un levier coudé, est articulé sur le boîtier (F) ainsi que sur l'élément de tension (C) pour provoquer et/ou empêcher le mouvement relatif du deuxième élément de tension (C).

10. Dispositif selon l'une quelconque des revendications précédentes, dans lequel au moins un dispositif à ressort est prévu pour précontraindre dans l'une des positions respectives le dispositif de positionnement, les éléments de serrage (B), le deuxième élément de tension (C), le premier élément de tension (D), l'élément d'actionnement (E) et/ou l'élément de glissement (G).
